# EUROPEAN PATENT APPLICATION

(11) **EP 4 737 776 A1**
(43) Date of publication of application: **06.05.2026**
(21) Application number: 25171158.6
(22) Date of filing: 17.04.2025
(51) Int. Cl.: F16K 17/04, F16K 37/00, H01M 10/48, H01M 50/308, H01M 50/333, H01H 3/16

(54) **VENTING UNIT**

(30) Priority: 31.10.2024 EP 24210301
(71) Applicant: MoldTecs-01-2022 GmbH, 38667 Bad Harzburg (DE)
(72) Inventor: Ratajczack, Christelle, 53061 Laval Cedex 9 (FR)
(74) Representative: STT Sozietät Thews & Thews

(57) **Abstract**

A valve (1) comprising
a) a valve-housing (1.1) with a center axis (C) and with a gas channel (1.4);
b) a sealing surface (1.2)
c) a valve body (2) to open and to close the channel, and
d) a gasket (2.4) arranged on the valve body (2) whereby
e) the valve comprises at least one pair_T1 of electrical contacts;
f) and at least one electroconductive elastomer body (2.4), said body (2.4) being deformable,
g) depending on the axial position_Pv of the body (2) said pair_T1 are electrically contactable
i) through the body (2.4),
ii) with each other;

h) one of
i) at least two different axial positions_Pv of the body (2) or
ii) a deformation of said body (2.4) is detectable

## Description

### TECHNICAL FIELD

There are venting units or customized valves for mounting on an electrochemical device and for venting and degassing. The valve comprises a valve-housing forming a central gas channel. The central gas channel extends preferred over the entire length of the housing. The valve further comprises a valve body arranged in the gas channel with the valve body being preloaded by means of at least one elastic element positioned on top of the valve body for generating a closing force. The valve body has at least one gas opening, which is sealed by a membrane, permeable to gaseous media.

The invention relates to a valve for mounting on an electrochemical device housing for venting and degassing said electrochemical device housing, the valve comprising
a) a valve-housing with a center axis and with a gas channel;
b) a sealing surface coaxial with the center axis to open and to close the channel;
c) a valve body arranged in the gas channel, the valve body being movable along the center axis, positionable in different axial positions_Pv, said valve body is preloaded by means of at least one elastic element for forcing the valve body in at least one axial position_Pv1 in which the channel is closable and
d) a gasket arranged on the valve body applicable in contact to the sealing surface for closing the gas channel in the Position_Pv1 of the valve body.

The state of the art, DE 2019 100 085 A1, describes a valve for mounting on an electrochemical device housing for venting and degassing with a valve body, the valve body having one electrical contact with said housing for detecting two different axial positions of the valve body.

EP 3,840,083 A1 describes a valve for mounting on an electrochemical device housing for venting and degassing with an electroconductive valve body, the valve body closing two electrical contact zones of said housing for detecting two different axial positions of the valve body.

### BACKGROUND

Typical housings for receiving electronic components, such as e. battery cells, cannot be hermetically sealed due to temperature fluctuations and due to occurring gas fluctuations between the interior of the housing and the environment. This gas exchange must be feasible in order to prevent bursting or bulging of said housing. For this reason, there are ventilation systems. A ventilation system including a valve has also the function to prevent the penetration of dirt, moisture or water. Therefore, valves are known comprising semipermeable membranes that are gas-permeable but liquid-impermeable to enable a ventilation.

In addition to such a ventilation, such valves must provide emergency degassing of the housing. In case of a pressure peak, for example upon failure of a battery cell, this pressure must be released as quickly as possible because otherwise the housing might become damaged. Therefore, movable valve bodies are additionally used for carrying the membrane. In case of a sudden overpressure the valve body is movable for opening the housing for degassing. The increased pressure causes the valve body to be lifted against its preload of the elastic element. As soon as the pressure drops to a certain level, the valve body moves back into the closed position.

In the description, reference is made to the center axis_C of the housing as basis for defining all other directions. Every other direction, i.e. X, Y, axial, radial, circumferential, coaxial or parallel is in relation to said center axis C. The same applies for positions.

It is an object of the present invention to improve the sensitivity of an alert system for a venting unit and to improve the durability of the sensors for detecting.

According to a first aspect of the invention, the object is solved by the features that
e) the valve comprises at least one pair_T1 of electrical contacts;
f) and at least one electroconductive elastomer body, said elastomer body being deformable depending on the axial position_Pv of the valve body,
g) depending on said axial position_Pv said pair_T1 of electrical contacts are electrically contactable
   i) through the electroconductive elastomer body,
   ii) with each other;
h) one of
   i) at least two different axial positions_Pv of the valve body or
   ii) a deformation of said electroconductive elastomer body is detectable.

The necessary electrical contacts and their electrical contacts are easily applicable on the housing in form of an integrated solution with minor modifications, one or more electroconductive elastomer bodies as well. Electroconductive elastomer bodies and simple electrical contacts, i.e. contact surfaces or contact points, are resistant to probable environmental conditions.

According to another aspect of the invention it can also be advantageous, if said gasket is an electroconductive elastomer body or said gasket is at least partly composed of an electroconductive elastomer and said gasket electrically interacts with said pair_T1 of electrical contacts. As regards the sealing principle elastomer body no modifications of the architecture are necessary, neither the mandatory gasket itself nor the housing or the valve body.

The recognizability of any movement of the valve body or the gasket is enhanced, if said electrical contacts are applied to said sealing surface and said gasket electrically interacts with said electrical contacts in said closed axial Position_Pv1 of said valve body. In case of an initial opening of the gasket or movement of the valve body, said movement will be recognizable. Everything of the new detecting device is in the sealing surface as part of a base plate.

No additional component for detecting the movement of the valve body is used. Supplying the voltage for this electrical detect-circuit is made apart from the main battery to guarantee a safe signal. Different warning levels are possible, two or three levels of signal could be forecasted, given by the gasket integration over the part.

The recognizability of any movement of the valve body or the gasket is maximized, if there are several pairs_T1, _T2 of electrical contacts distributed in circumferential direction on said sealing surface. Even if the gasket is lifted not over the whole circumference, but only partly due to a tilting, said movement will be recognizable.

It can be advantageously provided that the electroconductive elastomer body is fixed on an outer surface of said valve body, whereby said pair of electrical contacts are applied on a contact surface of said valve-housing, whereby said elastomer body and said electrical contacts electrically interacts in an at least partly opened axial position_Pv2, _Pv3 of the valve body. This is an additional way of determining the position of the valve body, in addition to an initial opening of the seal due to a small movement.

It can be of particular importance for this invention, if there are several pairs_T1, _T2 of electrical contacts distributed in circumferential direction on said contact surface. Even if the valve body is lifted not over the whole circumference, but only partly due to a tilting, said movement will be recognizable.

In connection with the design and arrangement according to the invention, it can be advantageous, if said elastomer body touches said surface with a linear contact-zone, whereby at least one pair_T1, _T2 of electrical contacts is contactable via said elastomer body. Dependent on the elasticity of the elastomer body on the one hand and the force due to the preload of the spring on the other hand, the width of the contact-zone can be specified.

In connection with the design and arrangement according to the invention, it can be advantageous, if there is an upper wall section of said valve-housing and a sensing device, whereby said sensing device is integrated in said upper wall section and comprises said pair_T1 of electrical contacts, whereby one of said two electrical contacts is configured as an electroconductive elastomer body, that undergoes a deformation due to said axial position_Pv of the valve body. Said deformation goes along with an electrical connection between said electrical contacts. This is a third possibility to detect the movement and the position of the valve body using one or more elastomer bodies. Everything of the detecting device is in the upper wall section, i.e. the cover plate.

For this purpose, it can also be advantageous, if said device is used for mounting said elastic element, i.e. a spring, whereby the force of said elastic element generated by an at least partly opened axial position_Pv2, _Pv3 of said valve body goes along with a deformation of said elastomer body and with an electrical connection between said electrical contacts. Dependent on the elasticity of the spring on the one hand and the elasticity of the elastomer body on the other hand, any axial position of the valve body is detectable.

It may also be advantageous, if said device is a stop, for example said electrical contact has a stop-head for said valve body in a fully opened axial position_Pv3, whereby said position_Pv3 of said valve body goes along with a deformation of said stop, i.e. the stop-head, and with an electrical connection between said electrical contacts. This is a third possibility to detect maximal movement and the top position of the valve body using one or more elastomer bodies.

For this it may also be advantageous, if said device is made of at least six components, whereby one is a cathode, two are anodes and three of them are electric insulators, whereby two insulators are placed between said cathode and the corresponding anode, and one insulator is placed between said cathode and said housing.

Finally, the object is solved by an alert system, which integrates a valve as described above.

At last, the object is solved by an electrochemical device housing which integrates an alert system or a valve as described above.

Further advantages and details of the invention are explained in the patent claims and in the description and shown in the figures. It shows
- Figure 1: a concept of a valve;
- Figure 2a: a cut view of a valve with valve body in closed position_Pv1;
- Figure 2b: a cut view of a housing with electrical contacts in the sealing surface;
- Figure 3a: a cut view of a valve with valve body in closed position_Pv1;
- Figure 3b: a cut view of a valve with valve body in partly opened position_Pv2;
- Figure 3c: a cut view of a valve with valve body in full opened position_Pv3;
- Figure 4a: a cut view of a valve with valve body in partly opened position_Pv2;
- Figure 4b: a cut view of a valve with valve body in full opened position_Pv3;
- Figure 5a: a top view of a sealing surface with electrical contacts;
- Figure 5b: a top view of an electroconductive elastomer body or gasket with its contact-zone;
- Figure 6a: a cut view of a valve body with gasket and sealing surface;
- Figure 6b: a cut view of figure 6a with inclined gasket or valve body;
- Figure 7: a concept of a sensing device;
- Figure 8: a concept of an electrochemical device housing with an alert system and a valve.

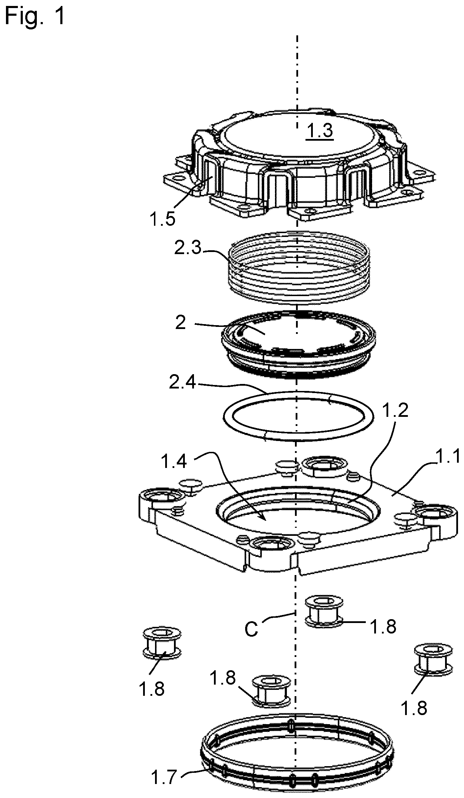

Figure 1 shows an exploded view of a valve 1 for mounting on an electrochemical device housing 5 for venting and degassing the electrochemical device housing 5. The valve 1 comprises a flat valve-housing 1.1 with a center axis_C and with a gas channel 1.4 as well as a conical sealing surface 1.2 being coaxial with the center axis_C. Furthermore, a valve body 2 arrangeable in the gas channel 1.4 and the valve body 2 being movable along the center axis_C to open and to close the channel. Positionable in different axial positions_Pv, said valve body 2 is preloadable by means of at least one spring 2.3 for forcing the valve body 2 in at least one axial position_Pv1 in which the channel is closed.

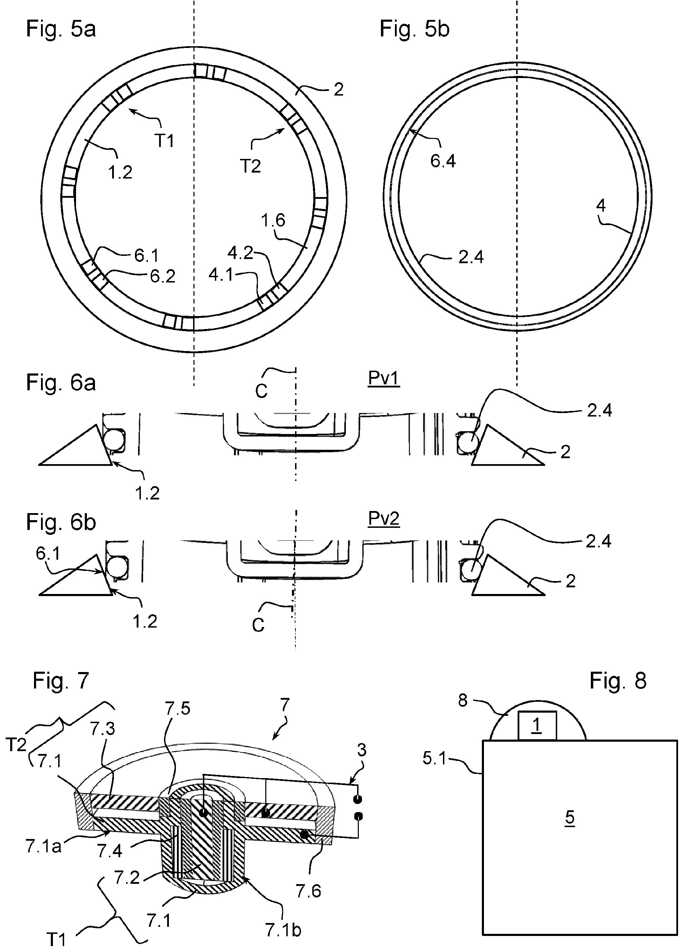

Additionally, there is a gasket 2.4 arranged on the valve body 2 applicable to contact the sealing surface 1.2 for sealing the closed gas channel 1.4. The valve body 2 is covered by a lid forming an upper wall section 1.3 with discharge openings 1.5 protecting said valve body 2 against dirt. For mounting reasons there are four cylindrical sleeves 1.8 as well as a sealing member 1.7 for fastening said valve-housing 1.1 on an opening of an electrochemical device housing 5 according to figure 8. Said sleeves 1.8 determine the distance between said housing 5 and a wall of an electrochemical device housing to have an optimal force on said sealing member 1.7.

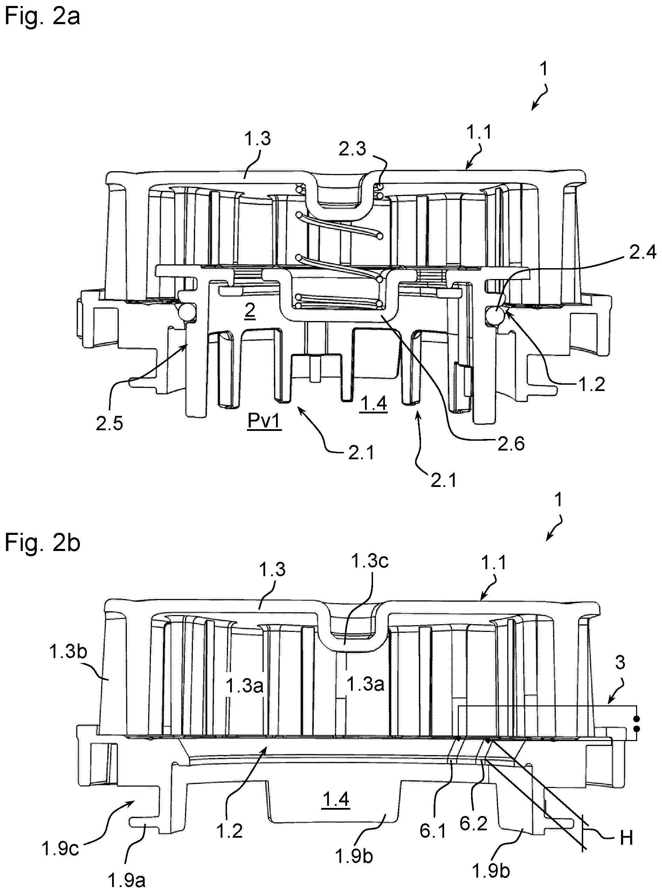

Figures 2a - 4b show a sectional view of said valve-housing 1.1, said valve body 2 and said upper wall section 1.3 of different embodiments.

According to figure 2a said valve body 2 is in its lowest closed position_Pv1, in which said gasket 2.4 is in contact with said sealing surface 1.2 for sealing said gas channel 1.4. Said valve body 2 is preloaded by said spring 2.3. Said gasket 2.4 has a circular cross-section. Other cross-sections are possible, like flat or a combination of a base-body and a thin sealing lip. Said gasket 2.4 is fixed on an outer surface 2.5 of said valve body 2. Said valve body 2 has several stiffening bars (2.1). Additionally to this, there is an axially inwardly extending mounting section 2.6 to radially hold said spring 2.3.

In figure 2b said valve body 2 is omitted. Recognizable are two electrical contacts 6.1, 6.2 within the conical sealing surface 1.2. Said two electrical contacts 6.1, 6.2 within said conical sealing surface 1.2 form a plain surface. They extend over the whole height of said conical sealing surface 1.2. This pair_T1 of electrical contacts 6.1, 6.2 interacts with said gasket 2.4 being an electroconductive elastomer body. Further pairs of electrical contacts are foreseen to detect any local deformation or movement of said elastomer body 2.4.

Said valve-housing 1.1 has a circumferential stiffening rip 1.9a extending outwardly to the housing 1.1 as well as several stiffening rips 1.9b extending axially. In addition, there is a circumferential groove 1.9c for mounting said sealing member 1.7.

Said lid 1.3 has several gas-openings 1.3a within its circumferential wall as well as several stiffening rips 1.3b extending radially. Additionally to this, there is an axially inwardly extending mounting section 1.3c to radially hold said spring 2.3.

Said elastomer body 2.4 is deformable. The deformation depends on its pressure on said sealing surface 1.2 due to the axial position_Pv of the valve body 2. Depending on the axial position_Pv of the valve body 2 said pair_T1 of electrical contacts 6.1, 6.2 are electrically contactable by said electroconductive elastomer body 2.4.. Additionally to this closed and sealed position_Pv1 of said valve body 2 a partly open position_Pv2 due to a deformation of said electroconductive elastomer body 2.4 going along with a local deformation and/or a separation from said contacts is detectable, too.

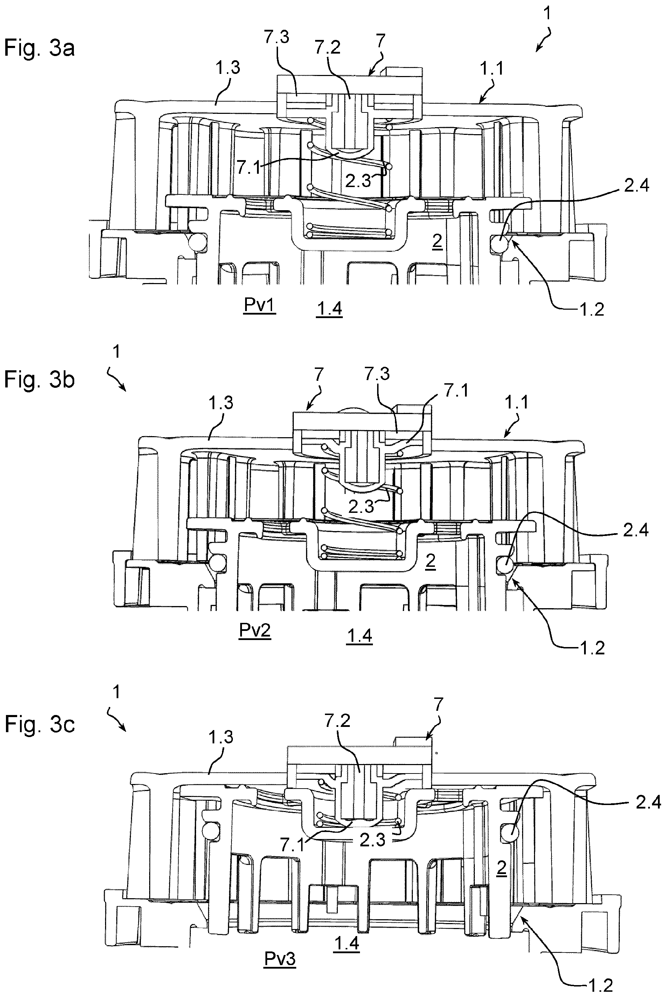

According to figure 3a there is additionally a sensing device 7 assembled on said upper wall section 1.3. Said sensing device 7 has an electroconductive mount 7.1 for said spring 2.3 in form of a shoulder 7.1b and a stop-head 7.1a. The shoulder 7.1b takes up the spring-load and said stop-head 7.1a serves as a transverse bearing for the spring. Said mount is a first electrical contact in form of an elastomer body 7.1 being an elastic cathode. Starting from a closed axial Position_Pv1 said spring-load rises with lifting said valve body 2 in an at least partly opened axial position_Pv2 acording to figure 3b. Due to said spring-load said shoulder 7.1b gets deformed and gets in contact with a ring contact 7.3 as an anode located above said shoulder 7.1b making said position_Pv2 detectable.

If said valve body 2 is lifted in fully opened axial position_Pv3 according to figure 3c said stop-head 7.1a gets deformed due to the force of the shifted valve body 2 pushing against it. In this position_Pv3 said deformed stop-head 7.1a gets in contact with a center contact 7.2 of said sensing device 7 being a second anode making said position_Pv3 detectable.

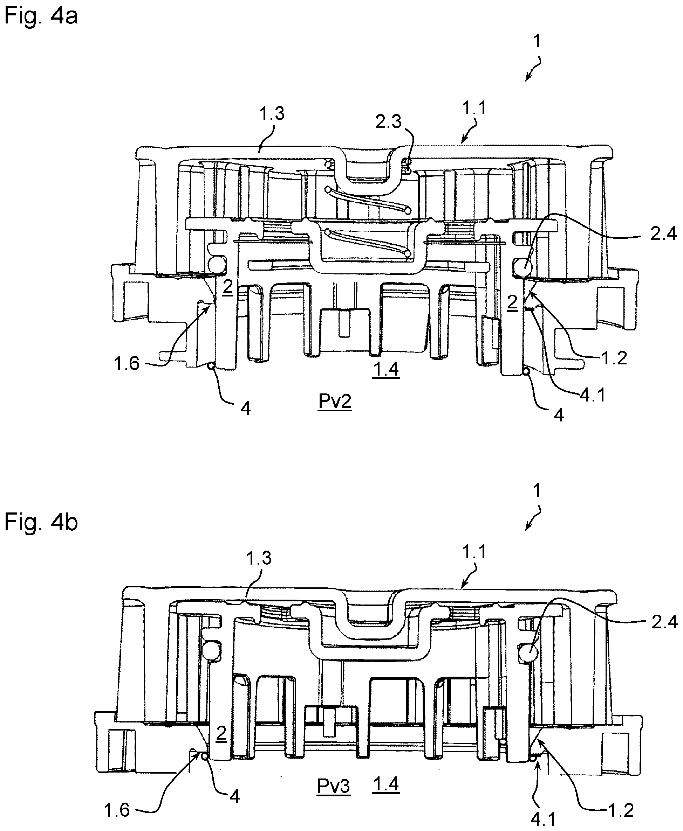

In a further embodiment according to figures 4a, 4b, there is an alternative to said sensing device 7 for the position_Pv3. At least one pair of electrical contacts 6.1 is located in a lower contact surface 1.6 facing downwards. On a lower end of said valve body 2 a further electroconductive elastomer body in form of a ring 4 is mounted. Said elastomer body 4 has a circular cross-section smaller than said gasket 2.4. In said fully opened position_Pv3 of said valve body 2 according to figure 4b said elastomer body 4 gets in contact with said lower contact surface 1.6 and its contacts 4.1, 4.2, i.e. a pair_T2 for detection said fully opened position_Pv3. Said spring 2.3 is omitted in said figure 4b.

Electrical contacts 6.1, 6.2 are applied to said sealing surface 1.2 and to said contact surface 1.6. Said gasket 2.4 and said electroconductive elastomer body 4 electrically interacts with said electrical contacts 6.1, 6.2, 4.1, 4.2. According to figure 5a, left side, there are eight pairs_T1, _T2 of electrical contacts 6.1, 6.2 distributed in circumferential direction on said sealing surface 1.2. According to figure 5a, right side, there are eight pairs_T1, _T2 of electrical contacts 4.1, 4.2 distributed in circumferential direction on said contact surface 1.6, too. Said elastomer body 2.4, 4 touches said surface 1.2, 1.6 with a linearly contact-zone 6.4 as stylized in figure 5b, and said pairs_T1, _T2 of contact are contacted. In case of a local deformation and separation of said elastomer body 2.4 at least the pair_T1 in the region of said local deformation gets decontacted, which is detectable.

In the closed axial Position_Pv1 of said valve body 2, according to figure 6a, all pairs_T1, _T2 of electrical contacts 6.1, 6.2 are contacted via said elastomer body 2.4. Hence said closed axial Position_Pv1 is detectable.

In an at least partly opened axial position_Pv2 of the valve body 2, according to figure 6b, said electroconductive elastomer body 2.4 interacts only with a part of said electrical contacts 6.1, 6.2, i.e. said pairs_T2 ff. Due to a local deformation of said elastomer body 2.4 or an unsymmetrical lifting movement of said valve body 2 said elastomer body 2.4 is partially lifted from said sealing surface 1.2 and at least one electrical contact 6.1, 6.2 which is accompanied by decontacting of at least one pair_T1. Thus, any partly opened axial position_Pv2 is detectable, too.

Said sensing device 7 according to figure 7 is composed of several parts. Said first contact 7.1 extending into a shoulder 7.1b, which serves as a mount 7.1b for said spring 2.3. Said first contact 7.1 extends further into a stop-head 7.1a, being a transverse bearing in form of a pick-up-pin for said spring 2.3. While said first contact 7.1 acts as a cathode, there is a center contact 7.2 being an anode located within said first contact 7.1 and being electrically isolated by a tube-like insulator 7.4 towards said first contact 7.1. The stop head 7.1a can be deformed by an axial force generated by said valve body 2 and comes into electrical contact with said center contact 7.2, which detects the fully open axial position_Pv3 of the valve body 2. Said shoulder 7.1b, is circumferentially insulated by an annular insulator 7.6 towards the outside. There is a ring contact 7.3 above said shoulder 7.1b being a second anode, which is axially spaced apart from said shoulder 7.1b. Said second anode 7.3 is circumferentially insulated by said annular insulator 7.6, too. Towards the inside, i.e. said first contact 7.1, said second anode 7.3 is insulated by an inner ring-like insulator 7.5. Said shoulder 7.1b can be deformed by an axial force generated by said spring 2.3 and comes into electrical contact with said second anode 7.3. Dependent on the elasticity of said spring 2.3 on the one hand and the elasticity of said shoulder 7.1a being an elastomer body on the other hand any axial position_Pv of said valve body 2 is detectable, especially the fully open axial position_Pv3 of the valve body 2. Said contacts in question are tapped via a contact loop 3 as illustrated.

According to figure 8 said valve 1 is mounted in a wall 5.1 of a housing of said electrochemical device 5 and integrated in an alert system 8, illustrated by a semicircular roof.

### List of references

- 1: valve
- 1.1: valve-housing
- 1.2: sealing surface
- 1.3: upper wall section1.3a gas-opening1
- 1.3b: stiffening rip
- 1.3c: mounting section
- 1.4: gas channel
- 1.5: discharge opening
- 1.6: contact surface
- 1.7: sealing member
- 1.8: sleeve
- 1.9a: stiffening rip
- 1.9b: stiffening rip
- 1.9c: groove
- 2: valve body
- 2.1: stiffening bar
- 2.3: elastic element, spring
- 2.4: gasket, electroconductive elastomer body
- 2.5: outer surface
- 2.6: mount
- 3: contact loop
- 4: electroconductive elastomer body
- 4.1: electrical contacts
- 4.2: electrical contacts
- 5: housing of electrochemical device
- 5.1: wall
- 6.1: electrical contact
- 6.2: electrical contact
- 6.4: contact zone
- 7: sensing device
- 7.1: first contact, elastomer body, elastic cathode, electroconductive mount
- 7.1a: stop-head, transverse bearing
- 7.1b: shoulder, mount
- 7.2: center contact, anode
- 7.3: ring contact, second anode
- 7.4: insulator
- 7.5: insulator
- 7.6: insulator
- 8: alert system

### Nomenclature

Centre axis_C
axial Position_Pv
closed axial Position_Pv1
partly opened axial position_Pv2
fully opened axial position_Pv3
height_H
pair_T1
pair_T2

## Claims

1. A valve (1) for mounting on an electrochemical device housing (5) for venting and degassing the electrochemical device housing (5), the valve (1) comprising
a) a valve-housing (1.1) with a center axis (C) and with a gas channel (1.4);
b) a sealing surface (1.2) coaxial with the center axis (C);
c) a valve body (2) arranged in the gas channel (1.4), the valve body (2) being movable along the center axis (C) to open and to close the channel, positionable in different axial positions_Pv, said valve body (2) is preloaded by means of at least one elastic element (2.3) for forcing the valve body (2) in at least one axial position_Pv1, in which the channel is closable and
d) a gasket (2.4) arranged on the valve body (2) applicable to contact the sealing surface (1.2) for closing the gas channel (1.4), **characterized in that**:
e) the valve (1) comprises at least one pair_T1, _T2 of electrical contacts (6.1, 6.2, 4.1, 4.2) and
f) at least one electroconductive elastomer body (2.4, 4), said elastomer body (2.4, 4) being deformable depending on the axial position_Pv of the valve body (2),
g) depending on the axial position_Pv of the valve body (2) said pair_T1, _T2 of electrical contacts (6.1, 6.2, 4.1, 4.2) are electrically contactable
i) through the electroconductive elastomer body (2.4, 4),
ii) with each other;
h) one of
i) at least two different axial positions_Pv of the valve body (2) or
ii) a deformation of said electroconductive elastomer body (2.4, 4). is detectable.

2. A valve (1) according to claim 1,
**characterized in that** said gasket (2.4) is an electroconductive elastomer body or said gasket (2.4) is at least partly composed of an electroconductive elastomer and said gasket (2.4) electrically interacts with said pair_T1 of electrical contacts (6.1, 6.2).

3. A valve (1) according to claim 2,
**characterized in that** said electrical contacts (6.1, 6.2) are applied to said sealing surface (1.2) and said gasket (2.4) electrically interacts with said electrical contacts (6.1, 6.2) in said closed axial Position_Pv1 of said valve body (2).

4. A valve (1) according to claim 3,
**characterized in that** there are several pairs_T1, _T2 of electrical contacts (6.1, 6.2) distributed in circumferential direction on said sealing surface (1.2).

5. A valve (1) according to claim 1,
**characterized in that**
said electroconductive elastomer body (4) is fixed on an outer surface (2.5) of said valve body (2) whereby said pair_T2 of electrical contacts (4.1, 4.2) are applied on a contact surface (1.6) of said valve-housing (1.1), whereby said elastomer body (1.6) and said electrical contacts (4.1, 4.2) electrically interacts in a closed or at least partly opened axial position_Pv1, _Pv2 of the valve body (2).

6. A valve (1) according to claim 5,
**characterized in that** there are several pairs_T2 of electrical contacts (4.1, 4.2) distributed in circumferential direction on said contact surface (1.6).

7. A valve (1) according to any one of the claims 1 to 6,
**characterized in that** said elastomer body (2.4, 4) touches said surface (1.2, 1.6) with a linearly contact-zone (6.4), whereby at least one pair_T1, _T2 of electrical contacts (6.1, 6.2, 4.1, 4.2) is contactable via said elastomer body (2.4, 4).

8. A Valve (1) according to claim 1,
**characterized in that** there is an upper wall section (1.3) of said valve-housing (1.1) and a sensing device (7), said sensing device (7) is integrated in said upper wall section (1.3), said device (7) comprising said pair_T1 of electrical contacts (7.1, 7.2, 7.3), wherein at least one of the electrical contacts (7.1) is configured as an electroconductive elastomer body that undergoes a deformation due to said axial position_Pv of the valve body (2), whereby said deformation goes along with an electrical connection between said electrical contacts (7.1, 7.2, 7.3).

9. A valve (1) according to claim 8,
**characterized in that** said device (7) is used for mounting said elastic element (2.3), whereby the force of said elastic element (2.3) generated by an at least partly opened axial position_Pv2, _Pv3 of said valve body (2) goes along with a deformation of said elastomer body (7.1) and with an electrical connection between said electrical contacts (7.1, 7.3).

10. A valve (1) according to claim 8 or 9,
**characterized in that** said electrical contact (7.1) has a stop-head **(7.1a)** for said valve body (2) in a fully opened axial position_Pv3, whereby said position_Pv3 of said valve body (2) goes along with a deformation of said stop-head (**7.1a**) **of** elastomer body **(7.1)** and with an electrical connection between said electrical contacts (7.1, 7.2).

11. A valve (1) according to any one of the claims 8 to 10,
**characterized in that** said device (7) is made of at least six components (7.1 - 7-6), whereby one is a cathode (7.1), two are anodes (7.2, 7.3) and three of them are electric insulators (7.4 - 7.6), whereby two insulators (7.4, 7.5) are placed between said cathode (7.1) and the corresponding anode (7.2, 7.3) and one insulator (7.6) is placed between said cathode (7.1) and said housing (1.1).

12. A valve (1) according to any of the preceding claims in the function of a venting unit.

13. An alert system (8) which integrates a valve (1) according to any one of the preceding claims.

14. An electrochemical device housing (5) which integrates an alert system (8) according to claim 13 or a valve (1) according to one of the preceding claims 1 to 12.

## Amended claims

### Amended claims in accordance with Rule 137(2) EPC.

1. A valve (1) for mounting on an electrochemical device housing (5) for venting and degassing the electrochemical device housing (5), the valve (1) comprising
a) a valve-housing (1.1) with a center axis (C) and with a gas channel (1.4);
b) a sealing surface (1.2) coaxial with the center axis (C);
c) a valve body (2) arranged in the gas channel (1.4), the valve body (2) being movable along the center axis (C) to open and to close the channel, positionable in different axial positions_Pv, said valve body (2) is preloaded by means of at least one elastic element (2.3) for forcing the valve body (2) in at least one axial position_Pv1, in which the channel is closable and
d) a gasket (2.4) arranged on the valve body (2) applicable to contact the sealing surface (1.2) for closing the gas channel (1.4), wherein:
e) the valve (1) comprises at least one pair_T1, _T2 of electrical contacts (6.1, 6.2, 4.1, 4.2) and
f) at least one electroconductive elastomer body (2.4, 4), said elastomer body (2.4, 4) being deformable depending on the axial position_Pv of the valve body (2), **characterized in that**
g) said at least one pair_T1, _T2 of electrical contacts (6.1/6.2, 4.1/4.2, 7.1/7.2, 7.1/7.3) is arranged on the housing (1.1) or on a wall section (1.3) of the housing (1.1) relative to which the valve body (2) is movable;
h) depending on the axial position_Pv of the valve body (2) said pair_T1, _T2 of electrical contacts (6.1, 6.2, 4.1, 4.2) is electrically contactable
i) through the electroconductive elastomer body (2.4, 4),
ii) with each other by deforming one electrical contact (7.1) being an elastomer body;
i) one of
i) at least two different axial positions_Pv of the valve body (2) or
ii) a deformation of said electroconductive elastomer body (2.4, 4). is detectable.

2. A valve (1) according to claim 1,
**characterized in that** said gasket (2.4) is an electroconductive elastomer body or said gasket (2.4) is at least partly composed of an electroconductive elastomer and said gasket (2.4) electrically interacts with said pair_T1 of electrical contacts (6.1, 6.2).

3. A valve (1) according to claim 2,
**characterized in that** said electrical contacts (6.1, 6.2) are applied to said sealing surface (1.2) and said gasket (2.4) electrically interacts with said electrical contacts (6.1, 6.2) in said closed axial Position_Pv1 of said valve body (2).

4. A valve (1) according to claim 3,
**characterized in that** there are several pairs_T1, _T2 of electrical contacts (6.1, 6.2) distributed in circumferential direction on said sealing surface (1.2).

5. A valve (1) according to claim 1,
**characterized in that**
said electroconductive elastomer body (4) is fixed on an outer surface (2.5) of said valve body (2) whereby said pair_T2 of electrical contacts (4.1, 4.2) are applied on a contact surface (1.6) of said valve-housing (1.1), whereby said elastomer body (2.4) and said electrical contacts (4.1, 4.2) electrically interacts in a closed or at least partly opened axial position_Pv1, _Pv2 of the valve body (2).

6. A valve (1) according to claim 5,
**characterized in that** there are several pairs_T2 of electrical contacts (4.1, 4.2) distributed in circumferential direction on said contact surface (1.6).

7. A valve (1) according to any one of the claims 1 to 6,
**characterized in that** said elastomer body (2.4, 4) touches said surface (1.2, 1.6) with a linearly contact-zone (6.4), whereby at least one pair_T1, _T2 of electrical contacts (6.1, 6.2, 4.1, 4.2) is contactable via said elastomer body (2.4, 4).

8. A Valve (1) according to claim 1,
**characterized in that** there is an upper wall section (1.3) of said valve-housing (1.1) and a sensing device (7), said sensing device (7) is integrated in said upper wall section (1.3), said device (7) comprising said pair_T1 of electrical contacts (7.1, 7.2, 7.3), wherein at least one of the electrical contacts (7.1) is configured as an electroconductive elastomer body that undergoes a deformation due to said axial position_Pv of the valve body (2), whereby said deformation goes along with an electrical connection between said electrical contacts (7.1, 7.2, 7.3).

9. A valve (1) according to claim 8,
**characterized in that** said device (7) is used for mounting said elastic element (2.3), whereby the force of said elastic element (2.3) generated by an at least partly opened axial position_Pv2, _Pv3 of said valve body (2) goes along with a deformation of said elastomer body (7.1) and with an electrical connection between said electrical contacts (7.1, 7.3).

10. A valve (1) according to claim 8 or 9,
**characterized in that** said electrical contact (7.1) has a stop-head (7.1a) for said valve body (2) in a fully opened axial position_Pv3, whereby said position_Pv3 of said valve body (2) goes along with a deformation of said stop-head (7.1a) of elastomer body (7.1) and with an electrical connection between said electrical contacts (7.1, 7.2).

11. A valve (1) according to any one of the claims 8 to 10,
**characterized in that** said device (7) is made of at least six components (7.1 - 7-6), whereby one is a cathode (7.1), two are anodes (7.2, 7.3) and three of them are electric insulators (7.4 - 7.6), whereby two insulators (7.4, 7.5) are placed between said cathode (7.1) and the corresponding anode (7.2, 7.3) and one insulator (7.6) is placed between said cathode (7.1) and said housing (1.1).

12. A valve (1) according to any of the preceding claims in the function of a venting unit.

13. An alert system (8) which integrates a valve (1) according to any one of the preceding claims.

14. An electrochemical device housing (5) which integrates an alert system (8) according to claim 13 or a valve (1) according to one of the preceding claims 1 to 12.
